# EUROPÄISCHE PATENTANMELDUNG

(11) **EP 2 955 259 A1**
(43) Veröffentlichungstag der Anmeldung: **16.12.2015**
(21) Anmeldenummer: 15161703.2
(22) Anmeldetag: 30.03.2015
(51) Int. Cl.: D04H 1/4291, B29C 70/48, B29B 11/16, B29C 70/08, D04H 1/435, D04H 1/4391, D04H 3/007, D04H 3/011, D04H 3/016, D04H 3/018

(54) **VERBUNDWERKSTOFFFLUSSHILFEVLIESSTOFF**

(30) Priorität: 13.06.2014 DE 102014108343
(71) Anmelder: J.H. Ziegler GmbH, 77855 Achern (DE)
(72) Erfinder: Leppert, Andreas, 77855 Achern (DE); Molnár, Attila, 9026 Gyoer (HU); Haas, Clemens, 79102 Freiburg (DE)
(74) Vertreter: Daub, Thomas

(57) **Zusammenfassung**

Die Erfindung geht aus von einem Verbundwerkstoffflusshilfevliesstoff, insbesondere von einem Verbundwerkstoffflusshilfenadelvliesstoff, mit zumindest einer Profilfaser (12a, 14a, 16a; 12b, 14b, 16b).

Es wird vorgeschlagen, dass die zumindest eine Profilfaser (12a, 14a, 16a; 12b, 14b, 16b) einen Feinheitswert größer oder gleich 40 dtex aufweist.

## Beschreibung

### Stand der Technik

Die Erfindung betrifft einen Verbundwerkstoffflusshilfevliesstoff nach dem Oberbegriff des Anspruchs 1, ein Verfahren zu einer Herstellung des Verbundwerkstoffflusshilfevliesstoffs und eine Verwendung des Verbundwerkstoffflusshilfevliesstoffs als Harzflusshilfe sowie einen Verbundwerkstoff der einen Verbundwerkstoffflusshilfevliesstoff umfasst.

Aus US 2013/0266750 A1 ist bereits ein Verbundwerkstoffflusshilfevliesstoff bekannt, der zumindest eine Profilfaser aufweist. Der Verbundwerkstoffflusshilfevliesstoff ist zu einer Verwendung als Harzflusshilfe in einem Harztransferverfahren vorgesehen. Zudem ist aus der US 2013/0266750 A1 bereits ein Verbundwerkstoff bekannt, der einen Verbundwerkstoffflusshilfevliesstoff mit einer profilierten Faser umfasst.

Die Aufgabe der Erfindung besteht insbesondere darin, einen gattungsgemäßen Verbundwerkstoffflusshilfevliesstoff mit einer hohen Permeabilität und zugleich einer hohen Druckbeständigkeit, insbesondere für einen Herstellungsprozess ausreichend Druckbeständigkeit, bereitzustellen. Die Aufgabe wird erfindungsgemäß durch die Merkmale des Anspruchs 1 gelöst, während vorteilhafte Ausgestaltungen und Weiterbildungen der Erfindung den Unteransprüchen entnommen werden können.

### Vorteile der Erfindung

Die Erfindung geht aus von einem Verbundwerkstoffflusshilfevliesstoff, insbesondere von einem Verbundwerkstoffflusshilfenadelvliesstoff, mit zumindest einer Profilfaser.

Es wird vorgeschlagen, dass die zumindest eine Profilfaser einen Feinheitswert größer oder gleich 40 dtex aufweist. Unter einer "Profilfaser" soll hier insbesondere eine Faser verstanden werden, die im Querschnitt ein von einem vollkreisflächigen Profil verschiedenes Profil aufweist, insbesondere im Querschnitt ein sternförmiges, ein viereckiges, ein trilobales, ein hufeisenförmiges, ein kreisringförmiges oder ein anderes, einem Fachmann als sinnvoll erscheinendes Profil aufweist. Die Profilfaser kann hierbei einen oder mehrere Hohlräume aufweisen. Insbesondere weist die zumindest eine Profilfaser einen Feinheitswert auf, der größer ist als 60 dtex, bevorzugt größer ist als 80 dtex und besonders bevorzugt größer ist als 85 dtex. Vorzugsweise weist die zumindest eine Profilfaser einen maximalen Faserdurchmesser von größer oder gleich 90 µm auf. Besonders bevorzugt weist die zumindest eine Profilfaser einen maximalen Faserdurchmesser auf, der einem Wert aus einem Wertebereich von 90 µm bis 250 µm entspricht.

Der Begriff "Verbundwerkstoffflusshilfevliesstoff" soll hier insbesondere einen Vliesstoff definieren, der bei einer Herstellung eines Verbundwerkstoffs, insbesondere eines Faserverbundwerkstoffs, als Harzflusshilfe einsetzbar ist. Somit ist der Verbundwerkstoffflusshilfevliesstoff vorzugsweise als Flächengebilde ausgebildet, das ganz oder zu einem wesentlichen Teil aus Fasern besteht. Hierbei kann der Verbundwerkstoffflusshilfevliesstoff zumindest eine Spinnfaser (Stapelfaser), zumindest ein Filament (Endlosfaser) und/oder zumindest eine Faser mit einem Schlankheitsgrad (Verhältnis von Faserlänge in mm zu Faserdurchmesser in mm) von mindestens 300 aufweisen. Fasern des Verbundwerkstoffflusshilfevliesstoffs sind vorzugsweise untereinander mittels einer formschlüssigen Verbindung (durch Verschlingung), mittels Kohäsion und/oder mittels Adhäsion verbunden. Hierbei können die Fasern des Verbundwerkstoffflusshilfevliesstoffs orientiert oder wirr angeordnet sein.

Mittels der erfindungsgemäßen Ausgestaltung kann vorteilhaft ein großer Faserdurchmesser der zumindest einen Profilfaser ermöglicht werden, ohne eine Faserdichte des Verbundwerkstoffflusshilfevliesstoffs zu reduzieren und/oder ein Flächengewicht des Verbundwerkstoffflusshilfevliesstoffs zu erhöhen, insbesondere im Vergleich zu einer Verwendung einer Nichtprofilfaser, insbesondere einer Nichtprofilfaser, mit einem Feinheitswert größer oder gleich 40 dtex. Ferner kann vorteilhaft ein geringes Flächengewicht des Verbundwerkstoffflusshilfevliesstoffs realisiert werden, ohne die Permeabilität oder die Faserdichte des Verbundwerkstoffflusshilfevliesstoffs zu reduzieren, insbesondere im Vergleich zu einer Verwendung einer Nichtprofilfaser, insbesondere einer Nichthohlfaser, mit einem Feinheitswert größer oder gleich 40 dtex. Zudem kann besonders vorteilhaft eine hohe Permeabilität und zugleich eine hohe Druckbeständigkeit des erfindungsgemäßen Verbundwerkstoffflusshilfevliesstoffs erreicht werden. Der erfindungsgemäße Verbundwerkstoffflusshilfevliesstoff eignet sich vorteilhaft zu einem Einsatz bei einer Herstellung von Leichtbauverbundwerkstoffen.

Des Weiteren wird vorgeschlagen, dass die zumindest eine Profilfaser einen Feinheitswert kleiner oder gleich 450 dtex aufweist. Somit weist die zumindest eine Profilfaser vorzugsweise einen Feinheitswert auf, der einem Wert aus einem Wertebereich von 40 dtex bis 450 dtex entspricht. Mittels der erfindungsgemäßen Ausgestaltung kann besonders vorteilhaft ein offenporiger Verbundwerkstoffflusshilfevliesstoff realisiert werden. Somit kann besonders vorteilhaft eine hohe Permeabilität des Verbundwerkstoffflusshilfevliesstoffs erreicht werden.

Ferner wird vorgeschlagen, dass die zumindest eine Profilfaser einen kreisringförmigen Querschnitt aufweist. Die zumindest eine Profilfaser weist hierbei, betrachtet in einer zumindest im Wesentlichen senkrecht zu einer Längsachse der Profilfaser verlaufenden Ebene, vorzugsweise einen kreisringförmigen Querschnitt auf. Hierbei weist bevorzugt ein Mantel der zumindest einen Profilfaser, betrachtet in der zumindest im Wesentlichen senkrecht zur Längsachse der Profilfaser verlaufenden Ebene, einen kreisringförmigen Querschnitt auf. Der Mantel der zumindest einen Profilfaser begrenzt somit, betrachtet in der zumindest im Wesentlichen senkrecht zur Längsachse der Profilfaser verlaufenden Ebene, vorzugsweise einen kreisförmigen Hohlraum der zumindest einen Profilfaser. Mittels der erfindungsgemäßen Ausgestaltung kann vorteilhaft eine konstruktiv einfache Ausgestaltung der zumindest einen Profilfaser ermöglicht werden. Somit kann vorteilhaft ein einfaches Herstellverfahren zu einer Herstellung der zumindest einen Profilfaser genutzt werden.

In einer alternativen Ausgestaltung des erfindungsgemäßen Verbundwerkstoffflusshilfevliesstoffs wird vorgeschlagen, dass die zumindest eine Profilfaser einen trilobalen Querschnitt aufweist. Die zumindest eine Profilfaser weist hierbei, betrachtet in der zumindest im Wesentlichen senkrecht zur Längsachse der Profilfaser verlaufenden Ebene, vorzugsweise einen trilobalen Querschnitt auf. Es ist jedoch auch denkbar, dass die zumindest eine Profilfaser in einer weiteren alternativen Ausgestaltung einen, von einem trilobalen oder kreisringförmigen Querschnitt abweichenden Querschnitt aufweist, wie beispielsweise einen polygonalen Querschnitt o. dgl. Hierbei ist es denkbar, dass in jedem Schenkel des trilobalen Querschnitts der zumindest einen Profilfaser ein Hohlraum angeordnet ist, oder dass die Schenkel des trilobalen Querschnitts der zumindest einen Profilfaser einen einzelnen Hohlraum umgeben, der beispielsweise in einem Zentrum der zumindest einen Profilfaser angeordnet ist. Mittels der erfindungsgemäßen Ausgestaltung kann vorteilhaft eine stabile Ausgestaltung der zumindest einen Profilfaser ermöglicht werden.

Zudem wird vorgeschlagen, dass die zumindest eine Profilfaser als Synthesefaser ausgebildet ist. Somit kann die zumindest eine Profilfaser beispielsweise als Polyamidfaser, als Polyesterfaser, als Polyolefinfaser, als Polyacrylnitrilfaser, als Polyvinylchloridfaser, als Polyvinylalkoholfaser, als Polyvinyllidenfaser, als Polytetrafluorethylenfaser, als Polyurethanfaser o. dgl. ausgebildet sein. Ebenso ist es denkbar, dass die zumindest eine Profilfaser als Regeneratfaser ausgebildet ist, bei der ein Faserquerschnitt durch die Herstellung bestimmt werden kann, wie beispielsweise Viskosefasern, Lyocellfasern oder andere, einem Fachmann als sinnvoll erscheinende nassgesponnene Fasern. Eine Ausgestaltung der zumindest einen Profilfaser als eine andere, einem Fachmann als sinnvoll erscheinende Synthesefaser ist ebenfalls denkbar. Mittels der erfindungsgemäßen Ausgestaltung kann vorteilhaft ein widerstandsfähiger Verbundwerkstoffflusshilfevliesstoff realisiert werden. Zudem kann vorteilhaft eine Anpassung von einer Eigenschaft des Verbundwerkstoffflusshilfevliesstoffs an ein gewünschtes Einsatzgebiet erfolgen.

Vorteilhafterweise ist die zumindest eine Profilfaser hierbei als thermoplastische Synthesefaser ausgebildet. Bevorzugt ist die zumindest eine Profilfaser somit als Polyethylentherephtalatfaser und/oder als Polypropylenfaser ausgebildet. Mittels der erfindungsgemäßen Ausgestaltung kann vorteilhaft eine einfache Herstellung der zumindest einen Profilfaser ermöglicht werden.

Vorteilhafterweise ist die zumindest eine Profilfaser als Hohlfaser ausgebildet. Der Begriff "Hohlfaser" soll hier insbesondere eine Faser definieren, die, betrachtet entlang einer Längsachse der Faser, zumindest einen sich zumindest im Wesentlichen entlang einer Gesamtlänge der Faser erstreckenden Hohlraum aufweist, der, betrachtet entlang zumindest einer um die Längsachse der Faser verlaufenden Umfangsrichtung, von zumindest einem Mantel der Faser umschlossen ist. Der Mantel der Faser kann hierbei den Hohlraum insbesondere kreisringförmig, trilobal, polygonal o. dgl. umgeben. Hierbei weist die als Hohlfaser ausgebildete Profilfaser vorzugsweise einen Hohlraumanteil von insbesondere zumindest mehr als 10 %, bevorzugt zumindest mehr als 20 % und besonders bevorzugt zumindest mehr als 25 % auf, bezogen auf einen Gesamtvolumenanteil der Profilfaser. Mittels der erfindungsgemäßen Ausgestaltung kann besonders bevorzugt ein Verbundwerkstoffflusshilfevliesstoff mit einem geringen Gewicht und einer hohen Permeabilität erreicht werden.

Ferner wird vorgeschlagen, dass der Verbundwerkstoffflusshilfevliesstoff eine Vielzahl an Profilfasern, insbesondere Hohlfasern, mit einem Feinheitswert größer oder gleich 40 dtex aufweist. Besonders bevorzugt weisen alle Profilfasern, insbesondere alle Hohlfasern, des Verbundwerkstoffflusshilfevliesstoffs jeweils einen Feinheitswert auf, der einem Wert aus einem Wertebereich von 40 dtex bis 450 dtex entspricht. Die Profilfasern des Verbundwerkstoffflusshilfevliesstoffs sind zu einer Bildung des Verbundwerkstoffflusshilfevliesstoffs vorzugsweise orientiert oder wirr angeordnet. Mittels der erfindungsgemäßen Ausgestaltung kann besonders vorteilhaft ein geringes Flächengewicht des Verbundwerkstoffflusshilfevliesstoffs realisiert werden, ohne die Permeabilität oder die Faserdichte des Verbundwerkstoffflusshilfevliesstoffs zu reduzieren, insbesondere im Vergleich zu einer Verwendung einer Nichtprofilfaser mit einem Feinheitswert größer oder gleich 40 dtex.

Zudem wird ein Verfahren zu einer Herstellung des erfindungsgemäßen Verbundwerkstoffflusshilfevliesstoffs vorgeschlagen. Bevorzugt weist das erfindungsgemäße Verfahren zumindest einen Verfahrensschritt auf, in dem die zumindest eine Profilfaser beispielsweise mittels eines Schmelzspinnverfahrens herstellbar ist. Es ist jedoch auch denkbar, dass die zumindest eine Profilfaser alternativ oder zusätzlich mittels eines Nassspinnverfahrens, mittels eines Trockenspinnverfahrens oder einem anderen, einem Fachmann als sinnvoll erscheinenden Extrusionsverfahrens herstellbar ist. In zumindest einem weiteren Verfahrensschritt werden die Profilfasern des Verbundwerkstoffflusshilfevliesstoffs zu einer Bildung des Verbundwerkstoffflusshilfevliesstoffs auf eine, einem Fachmann bereits bekannte Art und Weise bevorzugt zusammengefügt und verfestigt, insbesondere mittels einer Vernadelung. Somit ist der Verbundwerkstoffflusshilfevliesstoff besonders bevorzugt als Verbundwerkstoffverstärkungsnadelvliesstoff ausgebildet. Die Bildung des Verbundwerkstoffflusshilfevliesstoffs kann hierbei in nahezu beliebiger Weise erfolgen. Denkbar sind hier nassgelegte (wet laid Verbundwerkstoffflusshilfevliesstoffs), luftgelegte (air laid Verbundwerkstoffflusshilfevliesstoffs) und bevorzugt trockengelegte (gekrempelte Verbundwerkstoffflusshilfevliesstoffs) Vliesstoffprozesse zur Erzeugung einer Flächenware. Eine Verfestigung des Faserflors kann sowohl thermisch, chemisch oder mechanisch erfolgen. Am meisten bevorzugt ist die mechanische Verfestigung über eine Vernadelung. Mittels der erfindungsgemäßen Ausgestaltung ist vorteilhaft kostengünstig ein Verbundwerkstoffflusshilfevliesstoff herstellbar, der ein geringes Flächengewicht bei einer hohen Permeabilität und/oder einer hohen Faserdichte des Verbundwerkstoffflusshilfevliesstoffs aufweist.

Des Weiteren wird eine Verwendung des erfindungsgemäßen Verbundwerkstoffflusshilfevliesstoffs als Harzflusshilfe in einem Harztransferverfahren zu einer Herstellung eines Verbundwerkstoffs, insbesondere eines Faserverbundwerkstoffs, vorgeschlagen. Besonders bevorzugt wird der erfindungsgemäße Verbundwerkstoffflusshilfevliesstoff in einem Resin Transfer Molding Process (RTM-Verfahren) und/oder in einem Vacuum Assisted Resin Transfer Molding Process (VARTM-Verfahren) als Harzflusshilfe verwendet. Es ist jedoch auch denkbar, dass der Verbundwerkstoffflusshilfevliesstoff in einem anderen, einem Fachmann als sinnvoll erscheinenden Harztransferverfahren als Harzflusshilfe verwendet wird. Mittels der erfindungsgemäßen Verwendung des Verbundwerkstoffflusshilfevliesstoffs kann vorteilhaft eine zügige, gleichmäßige und vollflächige Harzverteilung sichergestellt werden.

Ferner wird ein Verbundwerkstoff, insbesondere ein Faserverbundwerkstoff, mit zumindest einem erfindungsgemäßen Verbundwerkstoffflusshilfevliesstoff vorgeschlagen. Besonders bevorzugt ist der Verbundwerkstoff als faserverstärkter, insbesondere glasfaserverstärkter, duroplastischer Kunststoff ausgebildet. Der erfindungsgemäße Verbundwerkstoffflusshilfevliesstoff bildet hierbei vorzugsweise ein Kernmaterial des Verbundwerkstoffs. Es ist jedoch auch denkbar, dass der Verbundwerkstoffflusshilfevliesstoff eine Außenlage des Verbundwerkstoffs bildet. Mittels der erfindungsgemäßen Ausgestaltung kann vorteilhaft ein Verbundwerkstoff realisiert werden, der eine gleichmäßige Harzverteilung aufweist, um eine stabile, insbesondere eine zumindest im Wesentlichen lufteinschlussfreie, Ausgestaltung des Verbundwerkstoffs zu ermöglichen.

Der erfindungsgemäße Verbundwerkstoffflusshilfevliesstoff, das erfindungsgemäße Verfahren, die erfindungsgemäße Verwendung und/oder der erfindungsgemäße Verbundwerkstoff sollen/soll hierbei nicht auf die oben beschriebene Anwendung und Ausführungsform beschränkt sein. Insbesondere können/kann der erfindungsgemäße Verbundwerkstoffflusshilfevliesstoff, das erfindungsgemäße Verfahren, die erfindungsgemäße Verwendung und/oder der erfindungsgemäße Verbundwerkstoff zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen sind zwei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßer Verbundwerkstoffflusshilfevliesstoff in einer schematischen Darstellung,
- Fig. 2: eine stark vergrößerte Detailansicht von Profilfasern des erfindungsgemäßen Verbundwerkstoffflusshilfevliesstoffs in einer schematischen Darstellung,
- Fig. 3: ein Verfahren zu einer Herstellung eines Verbundwerkstoffs, der das erfindungsgemäße Verbundwerkstoffflusshilfevliesstoff umfasst, in einer schematischen Darstellung und
- Fig. 4: eine stark vergrößerte Detailansicht von alternativen Profilfasern eines alternativen erfindungsgemäßen Verbundwerkstoffflusshilfevliesstoffs in einer schematischen Darstellung.

### Beschreibung der Ausführungsbeispiele

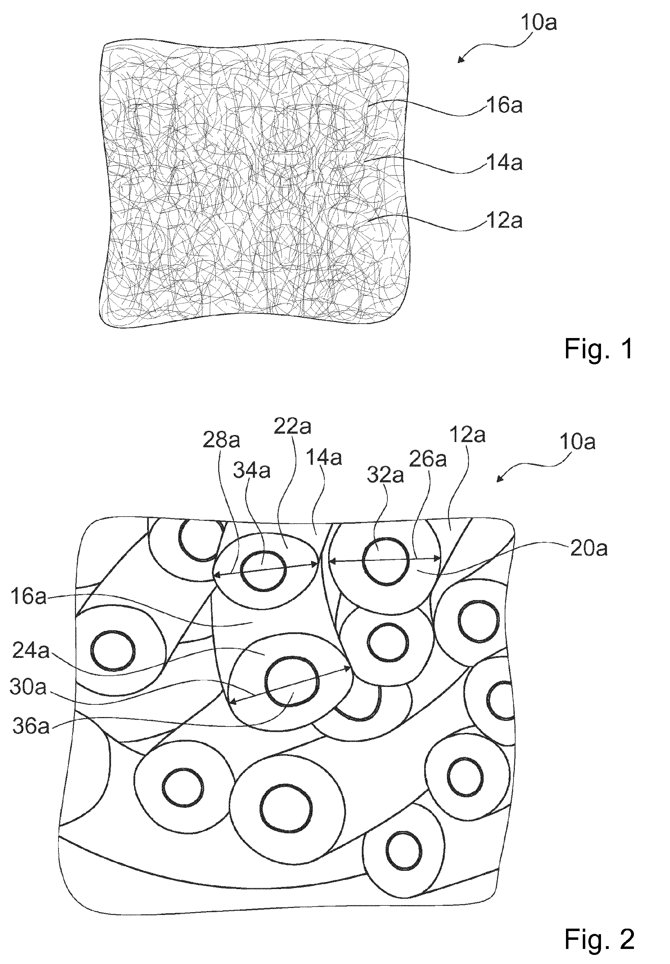

Fig. 1 zeigt ein Verbundwerkstoffflusshilfevliesstoff 10a mit zumindest einer Profilfaser 12a (Figur 2). Die Profilfaser 12a ist als Hohlfaser ausgebildet. Insgesamt weist der Verbundwerkstoffflusshilfevliesstoff 10a eine Vielzahl an Profilfasern 12a, 14a, 16a auf. Alle Profilfasern 12a, 14a, 16a sind als Hohlfasern ausgebildet. Die Profilfasern 12a, 14a, 16a sind hierbei mittels eines Vernadelungsverfahrens miteinander verbunden. Somit ist der Verbundwerkstoffflusshilfevliesstoff 10a als Verbundwerkstoffflusshilfenadelvliesstoff ausgebildet. Es ist jedoch auch denkbar, dass die Profilfasern 12a, 14a, 16a alternativ oder zusätzlich auf eine andere, einem Fachmann als sinnvoll erscheinende Art und Weise miteinander verbunden sind, wie beispielsweise mittels einer stoffschlüssigen Verbindung o. dgl. Zudem ist es denkbar, dass der Verbundwerkstoffflusshilfevliesstoff 10a in einer alternativen Ausgestaltung zusätzlich weitere Fasern, die eine von den Profilfasern 12a, 14a, 16a abweichende Ausgestaltung aufweisen, umfasst. Die weiteren Fasern können hierbei jede einem Fachmann als sinnvoll erscheinende Ausgestaltung aufweisen.

Die zumindest eine Profilfaser 12a weist einen Feinheitswert größer oder gleich 40 dtex auf. Hierbei weisen alle Profilfasern 12a, 14a, 16a des Verbundwerkstoffflusshilfevliesstoffs 10a jeweils einen Feinheitswert größer oder gleich 40 dtex auf. Somit weist der Verbundwerkstoffflusshilfevliesstoff 10a eine Vielzahl an Profilfasern 12a, 14a, 16a mit einem Feinheitswert größer oder gleich 40 dtex auf. Zudem weist die zumindest eine Profilfaser 12a einen Feinheitswert kleiner oder gleich 450 dtex auf. Hierbei weisen alle Profilfasern 12a, 14a, 16a des Verbundwerkstoffflusshilfevliesstoffs 10a jeweils einen Feinheitswert kleiner oder gleich 450 dtex auf. Somit weisen alle Profilfasern 12a, 14a, 16a des Verbundwerkstoffflusshilfevliesstoffs 10a einen Feinheitswert mit einem Wert aus einem Wertebereich von 40 dtex bis 450 dtex auf.

Figur 2 zeigt eine stark vergrößerte Detailansicht der Profilfasern 12a, 14a, 16a. Die zumindest eine Profilfaser 12a weist einen kreisringförmigen Querschnitt auf. Hierbei weisen alle Profilfasern 12a, 14a, 16a des Verbundwerkstoffflusshilfevliesstoffs 10a einen kreisringförmigen Querschnitt auf. Es ist jedoch auch denkbar, dass die Profilfasern 12a, 14a, 16a in einer alternativen Ausgestaltung des Verbundwerkstoffflusshilfevliesstoffs 10a einen voneinander abweichenden Querschnitt aufweisen, beispielsweise können einige der Profilfasern 12a, 14a, 16a einen kreisringförmigen Querschnitt aufweisen während andere der Profilfasern 12a, 14a, 16a einen polygonalen oder trilobalen Querschnitt aufweisen. Weitere, einem Fachmann als sinnvoll erscheinende Querschnittskombinationen der Profilfasern 12a, 14a, 16a sind ebenfalls denkbar. Die Profilfasern 12a, 14a, 16a weisen jeweils einen Mantel 20a, 22a, 24a auf, der jeweils zumindest einen Hohlraum 32a, 34a, 36a der jeweiligen Profilfaser 12a, 14a, 16a zumindest entlang einer zumindest im Wesentlichen senkrecht zu einer Längsachse der jeweiligen Profilfaser 12a, 14a, 16a verlaufenden Richtung begrenzt. Der Mantel 20a der zumindest einen Profilfaser 12a weist hierbei, betrachtet in einer sich zumindest im Wesentlichen senkrecht zur Längsachse der zumindest einen Profilfaser 12a erstreckenden Querschnittsebene, eine kreisringförmige Ausgestaltung auf. Hierbei weisen alle Profilfasern 12a, 14a, 16a des Verbundwerkstoffflusshilfevliesstoffs 10a einen Mantel 20a, 22a, 24a auf, der, betrachtet in einer sich zumindest im Wesentlichen senkrecht zur Längsachse der jeweiligen Profilfaser 12a, 14a, 16a erstreckenden Querschnittsebene, eine kreisringförmige Ausgestaltung aufweist.

Die Hohlräume 32a, 34a, 36a der Profilfasern 12a, 14a, 16a weisen, betrachtet in einer sich zumindest im Wesentlichen senkrecht zur Längsachse der jeweiligen Profilfaser 12a, 14a, 16a erstreckenden Querschnittsebene der jeweiligen Profilfaser 12a, 14a, 16a, eine kreisförmige Ausgestaltung auf. Es ist jedoch auch denkbar, dass die Hohlräume 32a, 34a, 36a der Profilfasern 12a, 14a, 16a eine andere, einem Fachmann als sinnvoll erscheinende Ausgestaltung aufweisen, wie beispielsweise eine polygonale oder eine trilobale Ausgestaltung o. dgl.

Des Weiteren weist die zumindest eine Profilfaser 12a einen maximalen Faserdurchmesser 26a auf, der größer oder gleich 90 µm ist. Der maximale Faserdurchmesser 26a der zumindest einen Profilfaser 12a ist kleiner oder gleich 250 µm. Somit weist die zumindest eine Profilfaser 12a einen maximalen Faserdurchmesser 26a auf, der einem Wert aus einem Wertebereich von 90 µm bis 250 µm entspricht. Hierbei weisen alle Profilfasern 12a, 14a, 16a einen maximalen Faserdurchmesser 26a, 28a, 30a auf, der einem Wert aus einem Wertebereich von 90 µm bis 250 µm entspricht.

Die zumindest eine Profilfaser 12a ist als Synthesefaser ausgebildet. Hierbei sind alle Profilfasern 12a, 14a, 16a des Verbundwerkstoffflusshilfevliesstoffs 10a als Synthesefasern ausgebildet. Es ist jedoch auch denkbar, dass einige der Profilfasern 12a, 14a, 16a als Synthesefasern ausgebildet sind und andere der Profilfasern 12a, 14a, 16a als Naturfasern ausgebildet sind. Die Profilfasern 12a, 14a, 16a des Verbundwerkstoffflusshilfevliesstoffs 10a sind bevorzugt als Polyethylentherephtalatfasern oder als Polypropylenfasern ausgebildet. Somit ist die zumindest eine Profilfaser 12a als thermoplastische Synthesefaser ausgebildet. Zudem sind somit alle Profilfasern 12a, 14a, 16a des Verbundwerkstoffflusshilfevliesstoffs 10a als thermoplastische Synthesefasern ausgebildet.

Die zumindest eine Profilfaser 12a ist hierbei beispielsweise mittels eines Schmelzspinnverfahrens herstellbar. Es ist jedoch auch denkbar, dass die zumindest eine Profilfaser 12a mittels eines anderen, einem Fachmann als sinnvoll erscheinenden Verfahren herstellbar ist, wie beispielsweise mittels eines Sinterverfahrens, mittels eines anderen Extrusionsverfahrens, mittels eines Nassspinnverfahrens, mittels eines Trockenspinnverfahrens, mittels eines 3-D-Druckverfahrens o. dgl. Die zumindest eine Profilfaser 12a ist vorzugsweise als Stapelfaser ausgebildet. Es ist jedoch auch denkbar, dass zu einer Herstellung des Verbundwerkstoffflusshilfevliesstoffs 10a die zumindest eine Profilfaser 12a als Filament (Endlosfaser) vorliegt. Zu einer Bildung des Verbundwerkstoffflusshilfevliesstoffs 10a wird die zumindest eine Profilfaser 12a mit den weiteren Profilfasern 14a, 16a mittels eines Vernadelungsvefahrens verbunden. Die Profilfasern 12a, 14a, 16a können hierbei orientiert oder wirr angeordnet sein. Somit weist ein Verfahren zu einer Herstellung des Verbundwerkstoffflusshilfevliesstoffs 10a zumindest eine Anordnung der Profilfasern 12a, 14a, 16a und deren Verbindung miteinander als Verfahrensschritte auf. Das Verfahren zur Herstellung des Verbundwerkstoffflusshilfevliesstoffs 10a kann ferner weitere, einem Fachmann als sinnvoll erscheinende Verfahrensschritte aufweisen, wie beispielsweise ein als Oberflächenveredelung ausgebildeter Verfahrensschritt o. dgl.

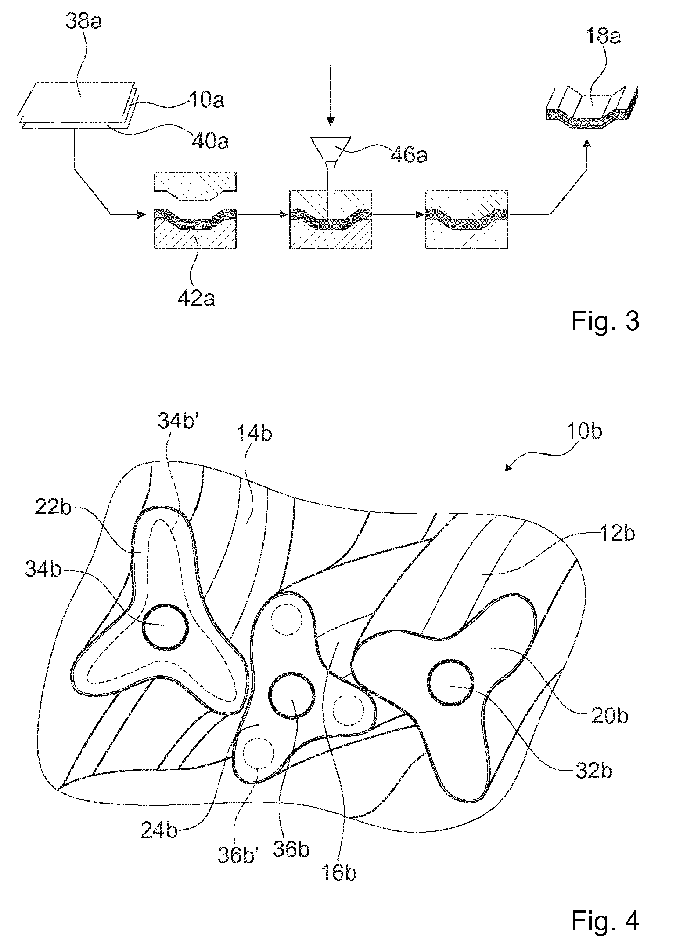

Der Verbundwerkstoffflusshilfevliesstoff 10a ist dazu vorgesehen, als Harzflusshilfe in einem Harztransferverfahren (Figur 3) zu einer Herstellung eines Verbundwerkstoffs 18a verwendet zu werden. Hierbei ist der Verbundwerkstoffflusshilfevliesstoff 10a insbesondere dazu vorgesehen, als Harzflusshilfe in einem Harztransferverfahren zu einer Herstellung eines als Faserverbundwerkstoffs ausgebildeten Verbundwerkstoffs 18a verwendet zu werden. Somit ist ein Verbundwerkstoff 18a, insbesondere ein Faserverbundwerkstoff, mit zumindest einem Verbundwerkstoffflusshilfevliesstoff 10a herstellbar. Der Verbundwerkstoffflusshilfevliesstoff 10a bildet hierbei ein Kernmaterial des Verbundwerkstoffs 18a. Es ist jedoch auch denkbar, dass der Verbundwerkstoffflusshilfevliesstoff 10a eine andere, einem Fachmann als sinnvoll erscheinende Lage des Verbundwerkstoffs 18a bildet, wie beispielsweise eine Außenlage.

Das Harztransferverfahren zur Herstellung des Verbundwerkstoffs 18a kann hierbei als Resin Transfer Molding Process (RTM-Verfahren) oder als Vacuum Assisted Resin Transfer Molding Process (VARTM-Verfahren) ausgebildet sein. Hierbei wird der Verbundwerkstoffflusshilfevliesstoff 10a zusammen mit zwei Außenlagen 38a, 40a des Verbundwerkstoffs 18a in ein formgebendes Werkzeug 42a einer Harztransfervorrichtung 44a eingelegt (Figur 3). Der Verbundwerkstoffflusshilfevliesstoff 10a ist hierbei zwischen den Außenlagen 38a, 40a angeordnet. Die Außenlagen 38a, 40a können hierbei als Fasermatten, als Gewebe, als Gelege oder andere geeignete Verstärkungsmaterialien, als unbehandelte, oder veredelte Textilien oder als andere, einem Fachmann als sinnvoll erscheinende Lagen des Verbundwerkstoffs 18a ausgebildet sein. In einem weiteren Verfahrensschritt wird das formgebende Werkzeug 42a mit den darin befindlichen Außenlagen 38a, 40a und dem dazwischen angeordneten Verbundwerkstoffflusshilfevliesstoff 10a geschlossen. Ferner wird in einem weiteren Verfahrensschritt den im formgebenden Werkzeug 42a befindlichen Außenlagen 38a, 40a und dem dazwischen angeordneten Verbundwerkstoffflusshilfevliesstoff 10a durch ein Kanal der Harztransfervorrichtung 44a ein Matrixwerkstoff 46a hinzugegeben. Der Matrixwerkstoff 46a wird beim RTM-Verfahren mittels Überdruck und bei VARTM-Verfahren mittels Unterdruck den im formgebenden Werkzeug 42a befindlichen Außenlagen 38a, 40a und dem dazwischen angeordneten Verbundwerkstoffflusshilfevliesstoff 10a zugeführt. Hierbei ist der Matrixwerkstoff 46a als Harz ausgebildet. Es ist jedoch auch denkbar, dass der Matrixwerkstoff 46a eine andere, einem Fachmann als sinnvoll erscheinende Ausgestaltung aufweist. Infolge der Ausgestaltung des Verbundwerkstoffflusshilfevliesstoffs 10a mit zumindest einer Profilfaser 12a, die einen Feinheitswert mit einem Wert aus einem Wertebereich von 40 dtex bis 450 dtex aufweist, ist vorteilhaft eine zügige, gleichmäßige und vollflächige Verteilung des Matrixwerkstoffs 46a erreichbar. Des Weiteren erfolgt in einem weiteren Verfahrensschritt ein Aushärten des Matrixwerkstoffs 46a. Nach einem Aushärten kann der Verbundwerkstoff 18a, der die Außenlagen 38a, 40a und den dazwischen angeordneten Verbundwerkstoffflusshilfevliesstoff 10a umfasst, aus dem formgebenden Werkzeug 42a entnommen werden.

In Figur 4 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung des anderen Ausführungsbeispiels, insbesondere der Figuren 1 bis 3, verwiesen werden kann. Zur Unterscheidung der Ausführungsbeispiele ist der Buchstabe a den Bezugszeichen des Ausführungsbeispiels in den Figuren 1 bis 3 nachgestellt. In dem Ausführungsbeispiel der Figur 4 ist der Buchstabe a durch den Buchstaben b ersetzt.

Figur 4 zeigt eine stark vergrößerte Detailansicht eines Verbundwerkstoffflusshilfevliesstoffs 10b, insbesondere eines Verbundwerkstoffflusshilfenadelvliesstoffs, mit zumindest einer Profilfaser 12b, die einen Feinheitswert größer oder gleich 40 dtex aufweist. Die zumindest eine Profilfaser 12b weist einen trilobalen Querschnitt auf. Somit umfasst die zumindest eine Profilfaser 12b einen Mantel 20b, der eine trilobale Ausgestaltung aufweist. Der Mantel 20b der zumindest einen Profilfaser 12b begrenzt hierbei zumindest einen Hohlraum 32b der zumindest einen Profilfaser 12b. Der Hohlraum 32b der zumindest einen Profilfaser 12b weist, betrachtet in einer sich zumindest im Wesentlichen senkrecht zu einer Längsachse der zumindest einen Profilfaser 12b erstreckenden Querschnittsebene, eine kreisförmige Ausgestaltung auf. Der Hohlraum 32b der zumindest einen Profilfaser 12b ist hierbei rotationssymmetrisch zur Längsachse der zumindest einen Profilfaser 12b angeordnet. Insgesamt weist der Verbundwerkstoffflusshilfevliesstoff 10b eine Vielzahl an Profilfasern 12b, 14b, 16b auf, die jeweils einen Mantel 20b, 22b, 24b und jeweils einen Hohlraum 32b, 34b, 36b aufweisen. Die Profilfasern 12b, 14b, 16b weisen eine zumindest im Wesentlichen analoge Ausgestaltung auf. Es ist jedoch auch denkbar, dass die Hohlräume 32b, 34b, 36b der Profilfasern 12b, 14b, 16b eine andere, einem Fachmann als sinnvoll erscheinende Ausgestaltung aufweisen. Zu einer beispielhaften Verdeutlichung verschiedener Ausgestaltungen von Hohlräumen 32b, 34b, 36b sind an zwei der in Figur 4 dargestellten Profilfasern 14b, 16b des Verbundwerkstoffflusshilfevliesstoffs 10b alternative Ausgestaltung von Hohlräumen 34b', 36b' gestrichelt dargestellt. Hierbei weist eine der Profilfasern 14b, 16b einen alternativen Hohlraum 34b' auf, der, betrachtet in einer sich zumindest im Wesentlichen senkrecht zu einer Längsachse der Profilfaser 14b erstreckenden Querschnittsebene, eine trilobale Ausgestaltung aufweist. Eine der Profilfasern 14b, 16b umfasst ferner eine Vielzahl an alternativen Hohlräumen 36b', die, betrachtet in einer sich zumindest im Wesentlichen senkrecht zu einer Längsachse der Profilfaser 16b erstreckenden Querschnittsebene, eine kreisförmige Ausgestaltung aufweisen und gleichmäßig verteilt um die Längsachse angeordnet sind. Hinsichtlich weiterer Merkmale und Funktionen des Verbundwerkstoffflusshilfevliesstoffs 10b darf auf die Beschreibung der Figuren 1 bis 3 verwiesen werden.

### Bezugszeichen

- 10: Verbundwerkstoffflusshilfevliesstoff
- 12: Profilfaser
- 14: Profilfaser
- 16: Profilfaser
- 18: Verbundwerkstoff
- 20: Mantel
- 22: Mantel
- 24: Mantel
- 26: Faserdurchmesser
- 28: Faserdurchmesser
- 30: Faserdurchmesser
- 32: Hohlraum
- 34: Hohlraum
- 36: Hohlraum
- 38: Außenlage
- 40: Außenlage
- 42: Werkzeug
- 44: Harztransfervorrichtung
- 46: Matrixwerkstoff

## Patentansprüche

1. Verbundwerkstoffflusshilfevliesstoff, insbesondere Verbundwerkstoffflusshilfenadelvliesstoff, mit zumindest einer profilierten Faser (12a, 14a, 16a; 12b, 14b, 16b), **dadurch gekennzeichnet, dass** die zumindest eine Profilfaser (12a, 14a, 16a; 12b, 14b, 16b) einen Feinheitswert größer oder gleich 40 dtex aufweist.

2. Verbundwerkstoffflusshilfevliesstoff nach Anspruch 1, **dadurch gekennzeichnet, dass** die zumindest eine Profilfaser (12a, 14a, 16a; 12b, 14b, 16b) einen Feinheitswert kleiner oder gleich 450 dtex aufweist.

3. Verbundwerkstoffflusshilfevliesstoff nach einem der vorhergehenden Ansprüche, **dadurch gekennzeichnet, dass** die zumindest eine Profilfaser (12a, 14a, 16a) einen kreisringförmigen Querschnitt aufweist.

4. Verbundwerkstoffflusshilfevliesstoff nach Anspruch 1 oder 2, **dadurch gekennzeichnet, dass** die zumindest eine Profilfaser (12b, 14b, 16b) einen trilobalen Querschnitt aufweist.

5. Verbundwerkstoffflusshilfevliesstoff nach einem der vorhergehenden Ansprüche, **dadurch gekennzeichnet, dass** die zumindest eine Profilfaser (12a, 14a, 16a; 12b, 14b, 16b) als Synthesefaser ausgebildet ist.

6. Verbundwerkstoffflusshilfevliesstoff nach einem der vorhergehenden Ansprüche, **dadurch gekennzeichnet, dass** die zumindest eine Profilfaser (12a, 14a, 16a; 12b, 14b, 16b) als thermoplastische Synthesefaser ausgebildet ist.

7. Verbundwerkstoffflusshilfevliesstoff nach einem der vorhergehenden Ansprüche, **dadurch gekennzeichnet, dass** die zumindest eine Profilfaser (12a, 14a, 16a; 12b, 14b, 16b) als Hohlfaser ausgebildet ist.

8. Verbundwerkstoffflusshilfevliesstoff nach einem der vorhergehenden Ansprüche, **gekennzeichnet durch** eine Vielzahl an Profilfaser (12a, 14a, 16a; 12b, 14b, 16b) mit einem Feinheitswert größer oder gleich 40 dtex.

9. Verfahren zu einer Herstellung eines Verbundwerkstoffflusshilfevliesstoffs nach einem der vorhergehenden Ansprüche.

10. Verwendung eines Verbundwerkstoffflusshilfevliesstoffs nach einem der Ansprüche 1 bis 8 als Harzflusshilfe in einem Harztransferverfahren zu einer Herstellung eines Verbundwerkstoffs, insbesondere eines Faserverbundwerkstoffs.

11. Verbundwerkstoff, insbesondere Faserverbundwerkstoff, mit zumindest einem Verbundwerkstoffflusshilfevliesstoff nach einem der Ansprüche 1 bis 8.
